# EUROPEAN PATENT APPLICATION

(11) **EP 1 150 150 A1**
(43) Date of publication of application: **31.10.2001**
(21) Application number: 00303570.6
(22) Date of filing: 27.04.2000
(51) Int. Cl.: G02B 6/42, G02B 6/26

(54) **Interfacing optical transmission structures**

(71) Applicant: BRITISH AEROSPACE PUBLIC LIMITED COMPANY, Farnborough, Hants. GU14 6YU (GB)
(72) Inventor: The designation of the inventor has not yet been filed
(74) Representative: Rooney, Paul Blaise

(57) **Abstract**

A surface-mountable interface module is attached to a central surface portion of a composite structure to interface with an optical transmission means embedded in the composite structure. The module has a mating surface for coupling to the composite structure to define an intersection between the module and the central surface portion, and contains interface optics to manipulate light that, in use, passes between the module and the optical transmission means through the intersection. A 'smart' variant of the module contains interrogation means for interrogating a sensor system associated with the optical transmission means, and power means for powering components within the module.

## Description

This invention relates to interfacing optical transmission structures and more particularly, though not exclusively, to techniques for coupling a first optical transmission means, such as an optical fibre that is embedded within a composite to a second optical transmission means, such as another optical fibre that is external to the composite.

In general, the term 'composite' as used herein is to be construed broadly unless the context demands otherwise. That term is directed to any support structure carrying an embedded optical transmission means, the support structure and the optical transmission means therefore together defining the composite. The term includes multi-layer structures but does not require the support structure itself necessarily to be a composite, although the support structure often will be a composite material in its own right. Typical composites are aircraft panels and other supportive structures made, for example, from plastics materials, carbon fibre, glass or metal.

Fibre optics embedded in composite structures can provide elegant distributed and embedded sensing functions, for example of strain or temperature, as well as the potential for embedded communications links. The use of optical fibres and advanced composites is becoming more accepted in the aircraft industry over the previous systems of electrical wiring and lightweight metals respectively. There are many advantages to the use of optical fibres, such as reduced weight, elimination of electromagnetic problems such as noise pick up and incidental radiation of signals, lower raw material costs, and elimination of potentially dangerous conductive paths.

These advantages are clearly desirable, and the functionality of embedded optical fibres is proven. However, the use of such optical systems in aerospace systems presents its own specific challenges, different to those associated with conventional systems, which have to date slowed acceptance of this new technology. For example, problems remain as to the best way of interfacing (i.e. launching and extracting light) to/from the embedded fibres. Additionally, the interrogation components/system must be accommodated wherever they can conveniently fit, usually within the main structure to which the composite structure is attached or of which the composite structure forms a part. For example, where the composite structure forms part of an aircraft, the main structure may be the airframe of that aircraft.

One interfacing technique, described in US Patent No. 5,299,273, involves attaching a relatively large optical connector to a composite laminate part having an optical fibre embedded therein. The optical connector is attached by trimming the structure across the path of the optical fibre thereby exposing an end of the fibre that lies flush with the surface of the structure. Then the optical fibre is polished and the connector is fitted using micro-positioning techniques to correctly align the connector and optical fibre.

Other current interfacing solutions include allowing delicate embedded fibres to emerge from the structure surface or edge (so called 'flying leads'), or embedding fibre connectors in a surface of the composite at the ends or sides of embedded optical fibres for subsequent connection to external optical devices or other optical fibres. Examples of the latter type of coupling are shown in US 5,809,197 and in the paper by S. Meller, J. Greene, C. Kozikowski, K. Murphy, R. Claus, *"Polymer and Metal-Matrix Composite-Embedded Optical Fibres for Avionics Communications Links, "* SPIE Proceedings, Vol. 3042, pp. 383-388, 1997.

The provision of flying leads is problematical in that these are potential single points of failure during use of the composite. As well as being prone to damage, the fibres must be managed during composite manufacture (e.g. lay-up), which increases manufacturing complexity, time and cost. Likewise, the provision of conventional embedded connectors at the composite surface can also complicate the manufacturing process particularly since these embedded connectors tend to be bulky and require careful protection. Additionally, resin accretion can occur around these connectors. and also in the case of flying leads; this can lead to embrittlement and contamination effects.

Generally, therefore, all of the above methods suffer from the problem of potential damage to the optical fibres emerging from the composite and to the embedded connectors present at the surface of the composite when the composite needs to be finished in its manufacturing process. These problems have hindered the universal acceptance of embedded optical fibre systems within the aerospace industry.

The Applicant's co-pending UK Patent Application Nos. 0000405·1 and 0000415·0 by the same inventors aim to overcome or at least substantially to reduce the above described problems. In those patent applications, techniques are presented for creating the interface to embedded fibre systems after composite panels had been manufactured. The fibres and any interface optics remain buried and hence hidden in the structure until after manufacture. An interface to the fibres is then formed by one of various techniques. The result is the formation of optical ports or windows that allow interfacing to the fibres buried in the composite. As the interface is created after composite manufacture, there is no need to manage, or risk of damage to, the delicate trailing fibre leads.

The present invention relates closely to the Applicant's UK Patent Application Nos. 0000405.1 and 0000415.0 the contents of which are therefore incorporated herein by reference. The invention aims to simplify the interfacing and interrogation of embedded fibre systems and to provide more robust systems with benefits in terms of lifetime, cost and ease of maintenance. The invention may therefore be expected to speed the implementation of embedded fibre systems in the aerospace industry.

The invention resides in a surface-mountable interface module for attachment to a central surface portion of a composite structure to interface with an optical transmission means embedded in the composite structure, the module having a mating surface for coupling to the composite structure to define an intersection between the module and the central surface portion, and containing interface optics to manipulate light that, in use, passes between the module and the optical transmission means through the intersection.

This specification ascribes a particular meaning to 'central surface portion' which is an interior portion of a surface, in the sense of being surrounded by other portions of that surface in a landlocked manner. This is to be distinguished from a peripheral portion of the surface defining an edge because, unlike the bulky edge-mounted optical connectors of the prior art, the module of the invention is suitable for application to such a central surface portion. However, the module of the invention could also be applied to a peripheral surface portion if needs be.

For optimum compactness, the module preferably includes beam-turning means for turning light from or into a direction substantially parallel to the central surface portion of the composite structure, respectively before or after the passage of said light through the intersection.

In general, it is advantageous for the module to present a streamlined exposed surface when the module is attached to the composite structure with the mating surface coupled to the central surface portion of the composite structure. The exposed surface may therefore have a convex, dome-like structure of part-elliptical cross-section. It is also possible for the exposed surface to be cuboidal. The term 'blister' is used in the description that follows to convey the idea of a small raised module that can sit neatly on the composite surface.

As the central surface portion of the composite structure will often be substantially planar, the mating surface can also be substantially planar. In cross-section, the mating surface and the exposed surface of the module advantageously intersect around the periphery of the module at an acute mutual internal angle.

Elegantly, the mating surface of the module is preferably penetrated by an optical port that communicates with the interface optics within the module. Those interface optics, which can be embedded within the module for optimum robustness, suitably comprise an optical interface portion adapted to interface with a co-operating optical interface portion in the composite structure.

The module may further comprise an external optical transmission means, which means may be a fibre optic link. A secondary light source can be integrated within the module to launch light into the external optical transmission means, as can an amplifier means to amplify light thus launched.

Locating formations such as one or more pins may be provided to co-operate with complementary locating formations in or on the composite structure.

The module of the invention advantageously includes interrogation means for interrogating a sensor system associated with the optical transmission means. This provides a compact, self-contained 'smart' module. The interrogation means can comprise sensor means for sensing parameters of light entering the module from the optical transmission means embedded in the composite structure. The module can then include data output means for outputting sensor data from the sensor means to a remote location for display and/or processing.

Whilst integral interrogation means is optional, it is preferred that the module at least includes some integral sensor components such as a filter or a coupler even if interrogation is performed externally.

The module can contain a light source means to generate light and to launch that light directly or indirectly into the optical transmission means embedded in the composite structure. For instance, the light source means can be coupled to the interface optics of the module or can be arranged to launch light directly into an interface within the composite structure.

Power means can be included within the module for powering components within the module as may be necessary. The power means may comprise opto-electronic power means for receiving optical energy and converting that energy into electrical energy, in which case provision may be made for a multi-mode optical fibre link to convey optical energy to the module. Alternatively, the power means can be powered via an umbilical electrical power link.

Where external power or data links are connected to the module, the module conveniently comprises externally-accessible optical or electrical connectors to enable releasable attachment of the power or data links to the module.

The invention extends to a composite structure comprising a support structure carrying an embedded optical transmission means, and having an interface module as defined above attached thereto in optical communication with the embedded optical transmission means. The interface module is preferably attached to a central surface portion of the structure. The invention also encompasses a method of making such a composite structure, the method comprising forming a passageway in the support structure to create an optical port between the embedded optical transmission means and the exterior of the composite structure, and attaching an interface module of the invention to the composite structure over the optical port.

The method generally involves aligning the interface optics within the module with the optical port formed in the support structure, which is advantageously achieved by aligning the aforementioned co-operating locating formations provided by the module and the composite structure. The module can then be bonded to the composite structure.

Accordingly, the invention presents a module that can interface simply onto the surface of a composite structure, enabling light to be introduced/extracted from an embedded fibre system and having the potential to integrate interrogation components also within the module. Given that an optical interface can be formed in this way, the invention allows use of this interface together with integration of sensor interrogation components. The invention provides a module that uses this interface in an efficient manner, a structure to which the module is attached, and a method for making such a structure.

In order that this invention can be more readily understood, reference will now be made, by way of example, to the accompanying drawings in which:
Figure 1 is a schematic sectional side view of a simple surface blister concept in which the blister module houses one half of an optical interface and connection to a fibre optic link, and in which interrogation of the embedded fibre system is performed remotely;
Figure 2 is an enlarged and more detailed schematic sectional side view corresponding to Figure 1, showing a blister module providing one half of the interface to an embedded fibre system and employing a simple collimated beam technique for the purposes of illustration; and
Figure 3 is a part-sectioned side view combined with an enlarged schematic sectional side view of a 'smart' surface blister module attached to an embedded fibre composite surface, within which module the light sources and components to interrogate the sensor system are integrated.

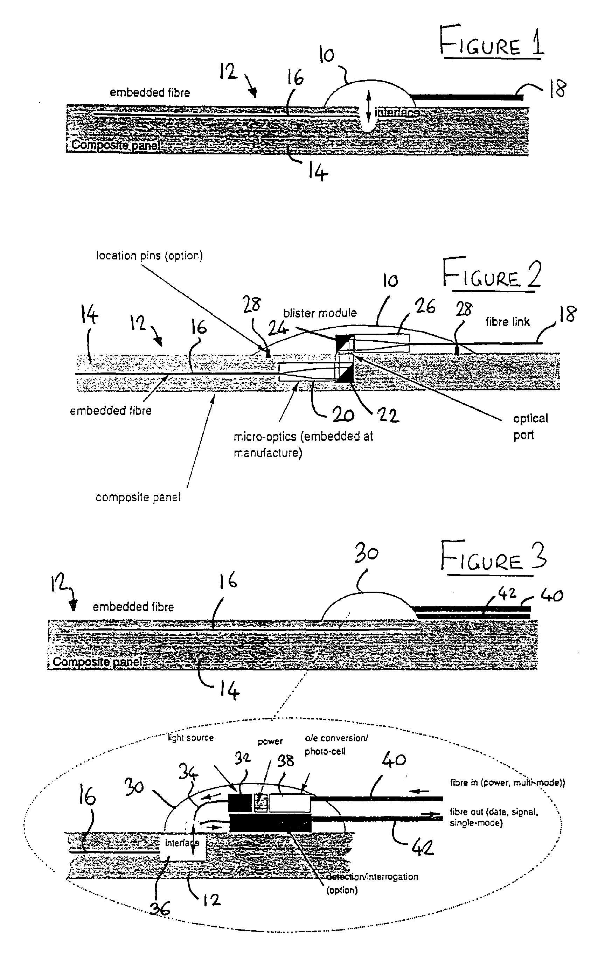

The simplest realisation of the invention is illustrated schematically in Figure 1 of the drawings. Here, an interface blister module 10 is attached to a composite structure 12 comprising a support structure, carrier or matrix 14 in which is embedded an optical transmission means in the form of an optical fibre 16. An intersection is thereby defined between the module 10 and the composite structure 12. The module 10 provides a fibre optic link 18, for example to remote interrogation equipment (not shown) for interrogation of the embedded fibre system 16, and optics to interface directly with other optics in the composite structure 12 that communicate with the embedded fibre 16. The module 10 therefore houses one half of an optical interface, the other co-operating half of which is in the composite structure 12. This interface bridges the intersection between the module 10 and the composite structure 12.

It will be noted that the module 10 of Figure 1 presents a streamlined exposed surface when the module 10 is attached to the composite structure 12 with a planar mating surface defining the underside of the module 10 coupled to a correspondingly planar central surface portion of the composite structure 12. The exposed surface of the module 10 is convex-curved into a dome shape of part-elliptical cross-section. The mating surface and the cross-section of the exposed surface intersect at the periphery of the module 10 mutually to define an acute internal angle, to the benefit of robustness, compactness and streamlining.

There are several ways in which the optical interface of Figure 1 can work. The more detailed view of Figure 2 shows one such way, in which the interface simply employs an expanded collimated beam or beamlets between the embedded fibre and the fibre optic link. Other interface techniques are possible; some will be outlined later.

The interface structure of Figure 2 is constructed in steps. Initially, a first beam-collimating micro-optical component 20 and a first beam-turning mirror 22 are embedded into a matrix during manufacture of the composite structure 12. After manufacture of the composite structure 12, a passageway is tunnelled through the matrix 14 to create an optical port between the first beam-turning mirror 22 and the exterior of the composite structure 12, thereby to channel light emerging from the first micro-optical component 20 through the optical port out of the composite structure 12. The passageway can be formed using various techniques, but preferably by the ablative laser machining methods described in the Applicant's aforementioned UK Patent Application Nos. 0000405·1 and 0000415·0.

Once the passageway is formed, the blister module 10 is attached to the external surface of the composite structure 12 over the optical port defined by the passageway. The module 10 can be bonded to the composite structure 12, formed *in situ* and/or held to the composite structure 12 by fasteners (not shown). The module 10 is positioned to bring a second beam-turning mirror 24 embedded within the module 10 into register with the optical port and hence into opposition with the first beam-turning mirror 22, so as to redirect light emerging from the port into a direction parallel to the surface of the composite structure 12. From the second beam-turning mirror 24, the light passes through a second micro-optical component 26 embedded within the module 10 and thence into the fibre optic link 18 that leads out of the module 10 as shown.

Locating pins 28 are an optional feature that are shown in Figure 2 but are applicable to other embodiments of the invention. These pins 28 ensure correct alignment between the module 10 and the port and help to hold the module 10 in place against external forces once so positioned. The pins 28 can project from the external surface of the composite structure 12 into correspondingly-positioned recesses in the flat underside of the module 10 or conversely can project from the underside of the module 10 into correspondingly-positioned recesses in the external surface of the composite structure 12. Other complementary co-operating locating formations will be evident to the skilled reader.

Turning now to Figure 3, this shows a 'smart' blister module 30 attached to a composite structure 12 containing an embedded fibre 16. Fibre sensor systems may require interrogation, where the light returned from the structure 12 is detected and sensed and the measurand is extracted from the light parameters, such as intensity through filters, wavelength shift introduced by strain/temperature and so on. The components for achieving this function are optionally integrated wholly or in part within the thus 'smart' interface blister 30. So, in this embodiment, the light source(s) and/or at least part of the componentry necessary to interrogate the sensor system are integrated within the module 30, along with the interface to the embedded fibre system 16. The interface itself can take many forms, as discussed elsewhere in this specification, and can be constructed by the abovementioned techniques.

A light source 32 such as an LED or a laser is housed within the blister module 30 of Figure 3, preferably pigtailed with optical fibre 34 to couple to the interface 36 as shown. Means 38 are provided for optical to electrical conversion whereby a multi-mode fibre link 40 to the blister module 30 provides optical power which is then converted to electrical power in the blister module 30, this in turn powering the light source 32 to launch light into the embedded fibre sensor system 16 via the interface 36.

The components within the module of Figure 3 are powered optically via opto-electronic conversion but could be powered electrically if preferred. However, in the preferred embodiment illustrated, fibre optic links provide power and/or data output channels.

The arrangement of the invention in Figure 3 embodies the concept of combining a fibre interface with power and processing in a streamlined module 30 that can be attached to the external surface of the composite structure. Fibre links 42 can provide power and/or data links for the output, or electrical connections could be made. The complexity of the module 30 would depend on the size and complexity of the individual components. Integration of various components and their functions onto a custom integrated opto-electronic circuit is also envisaged.

In all of these embodiments, the blister module 10, 30 is a robust interface-half with fibre optic leads attached. The blister module 10, 30 provides strain relief to the fibres of the fibre link so minimising the risk of damage, which would be of concern if conventional fibre connections were made into the composite structure.

Many variations are possible within the inventive concept. For example, the interface within the composite structure 12 could be of other design e.g. an evanescent interface or coupling in which the embedded fibre 16 is polished back near to the core to create a side coupling surface and the side coupling surface of another, mating, evanescent fibre is brought into contact with the side coupling surface of the first evanescent fibre 16 to couple light in/out of the structure 12. The purpose of evanescent coupling is that it enables a branching structure to be created such that the signal being transmitted along the optical fibre 16 can be split between the existing embedded optical fibre 16 and another optical fibre external to a composite 12 in which the fibre 16 is embedded. This form of coupling allows side-access to fibres in an efficient way, and may employ an interface coupler block to optically align the respective polished side coupling surfaces of the optical fibres.

In another embodiment (not shown), optical fibres with polished side coupling surfaces are replaced by D-fibres in the composite and in the blister module. D-fibres are similar to side-polished fibres and have a 'D' cross-section or profile defining a flat side close to the fibre core that gives them a reduced alignment tolerance compared to other optical fibre geometries. In other words, D-fibres are relatively insensitive to misalignment. Two such fibres laid flat together, flat side to flat side, will couple light between them, and the angle of overlap between the fibres can be used to tune coupling. Thus one D-fibre could be embedded in the composite and another coupled D-fibre can be located in a blister module attached to the composite.

Other coupling concepts that could be used to couple light between a blister module and the associated composite structure include etched fibre grooves (facets cut in the side of fibre to allow lateral coupling), in-fibre gratings (again for side coupling) and holographic elements. Alignment constraints can be eased using collimated beamlets as described above in relation to Figure 2 or alternatively, TEC (Thermally Expanded Core) fibre. The interface scheme adopted depends on factors such as the composite geometry, system power budget and the sensing architecture.

In the embodiment of Figure 3, a light source could be arranged to launch light directly into the composite panel interface 36 and could be powered from a remote umbilical electrical link attached to the blister. A further fibre link could output information to a remote location where sensor data would be displayed. All fibres or electrical power leads emerging from the blister module could be cabled together into a common cable construction.

A light source in the blister module 10, 30 could transmit sensor data back to a remote location after interrogation within the module. This light source could be a second light source used to launch into the embedded optical fibre and could be integrated into the blister module 10, 30 to transmit data over fibre. Also, the sensor data light could be amplified in the blister module 10, 30, for example in an optical fibre amplifier integrated within the module, before that amplified light travels out of the module on an optical link to be interrogated externally.

The blister module 10, 30 could have fibre connectors on its exposed surface(s), for example to one side, so as to allow optical/electrical connectors to be de-coupled. The connectors could be discrete single-way or integrated optical or electrical contacts within a multi-way connector. Such connectors would contribute an element of strain relief.

Whilst the blister module 10, 30 of the illustrated embodiments has a flat bottom mating surface to match a flat external surface of the composite structure, it will be apparent that neither the blister module 10, 30 nor the composite structure 12 has to define flat surfaces: other mating surface shapes are possible, as will generally be imposed by the shape of the composite structure 12. It is also possible for the blister module or pod to be of a non-domed geometry such as a cuboid of rectangular, e.g. square, cross-section or plan.

Having described particular preferred embodiments of the present invention, it is to be appreciated that the embodiments in question are exemplary only and that variations and modifications such as will occur to those possessed of the appropriate knowledge and skills may be made without departure from the spirit and scope of the invention as set forth in the appended claims.

## Claims

1. A surface-mountable interface module for attachment to a central surface portion of a composite structure to interface with an optical transmission means embedded in the composite structure, the module having a mating surface for coupling to the composite structure to define an intersection between the module and the central surface portion, and containing interface optics to manipulate light that, in use, passes between the module and the optical transmission means through the intersection.

2. The module of Claim 1, including beam-turning means for turning light from or into a direction substantially parallel to the central surface portion of the composite structure, respectively before or after the passage of said light through the intersection.

3. The module of Claim 1 or Claim 2, and being arranged to present a streamlined exposed surface when the module is attached to the composite structure with the mating surface coupled to the central surface portion of the composite structure.

4. The module of Claim 3, wherein the exposed surface is convex.

5. The module of Claim 4, wherein the convex exposed surface is a dome.

6. The module of Claim 4 or Claim 5, wherein the convex exposed surface is of part-elliptical cross-section.

7. The module of Claim 6, wherein the mating surface and the cross-section of the exposed surface intersect peripherally at an acute mutual internal angle.

8. The module of Claim 3, wherein the exposed surface is cuboidal.

9. The module of any preceding Claim, wherein the mating surface is substantially planar.

10. The module of any preceding Claim, wherein the mating surface is penetrated by an optical port communicating with the interface optics within the module.
